# EUROPEAN PATENT APPLICATION

(11) **EP 4 507 059 A1**
(43) Date of publication of application: **12.02.2025**
(21) Application number: 22961772.5
(22) Date of filing: 14.10.2022
(51) Int. Cl.: H01M 10/0585, H01M 10/0562, H01M 10/0565

(54) **BATTERY MODULE AND PREPARATION METHOD THEREFOR, AND BATTERY PACK AND ELECTRIC APPARATUS**

(71) Applicant: Contemporary Amperex Technology Co., Limited, Ningde, Fujian 352100 (CN)
(72) Inventor: MENG, Zhen, Ningde, Fujian 352100 (CN); LI, Xing, Ningde, Fujian 352100 (CN); ZHAO, Yanjie, Ningde, Fujian 352100 (CN); WEI, Guanjie, Ningde, Fujian 352100 (CN); ZHANG, Yu, Ningde, Fujian 352100 (CN); GU, Li, Ningde, Fujian 352100 (CN); LIN, Jianghui, Ningde, Fujian 352100 (CN)
(74) Representative: Laufhütte, Dieter
(86) International application number: PCT/CN2022/125289
(87) International publication number: WO 2024/077584

(57) **Abstract**

The present application relates to a battery module, including a positive electrode current collector, a negative electrode current collector, and a plurality of solid-state battery cells. The plurality of solid-state battery cells are stacked between the positive electrode current collector and the negative electrode current collector. Adjacent ones of the solid-state battery cells are electrically connected through a current collector coating layer. The solid-state battery cells at both ends are electrically connected to the positive electrode current collector and the negative electrode current collector respectively. Also, it relates to a corresponding method for preparing the battery module, a battery pack and an electrical apparatus. The battery module has low production cost and a simple production process.

## Description

### Technical Field

The present application relates to the technical field of secondary batteries, and in particular to a battery module and a method for preparing the same, a battery pack and an electrical apparatus.

### Background

In recent years, with the increasingly wide use of secondary ion batteries, secondary batteries are widely used in energy storage power systems such as water power, thermal power, wind power and solar power stations, as well as power tools, electric bicycles, electric motorcycles, electric vehicles, military equipment, aerospace and other fields.

During the preparation of a battery pack, generally a battery cell is first prepared, then a plurality of battery cells are connected in series and parallel to form a battery module, and then the plurality of battery modules are assembled into the battery pack. The manufacturing of positive and negative electrode plates of a battery cell is generally formed by coating positive and negative electrode materials on current collectors of a metal foil material such as copper foil and aluminum foil. The use of current collectors such as the copper foil and the aluminum foil will increase the cost of a battery; and the preparation process of coating first and then assembling is cumbersome.

Therefore, it has become one of the important research directions in the art how to reduce the production cost of the battery module and simplify the production process.

### Summary of the Invention

The present application is made in view of the aforementioned problems, and one of its objectives is to provide a battery module that does not require to dispose current collectors of a metal foil material in positive and negative electrode plates, which can reduce the production cost and can simplify the preparation process.

In order to achieve the aforementioned objective, a first aspect of the present application provides a battery module, including a positive electrode current collector, a negative electrode current collector, and a plurality of solid-state battery cells. The plurality of solid-state battery cells are stacked between the positive electrode current collector and the negative electrode current collector. Adjacent ones of the solid-state battery cells are electrically connected through a current collector coating layer. The solid-state battery cells at both ends are electrically connected to the positive electrode current collector and the negative electrode current collector respectively.

In any embodiment of the present application, the current collector coating layer includes a conductive material.

In any embodiment of the present application, the conductive material includes one or more of conductive carbon black, a carbon nanotube, graphene and a conductive polymer.

In any embodiment of the present application, the weight percentage of the conductive material in the current collector coating layer is 10%-100%.

In any embodiment of the present application, the current collector coating layer includes a first binder.

In any embodiment of the present application, the first binder includes one or more of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In any embodiment of the present application, the weight percentage of the first binder in the current collector coating layer is ≤ 50%.

In any embodiment of the present application, the current collector coating layer includes a first thickener.

In any embodiment of the present application, the first thickener includes one or more of a carboxymethyl cellulose salt, a hydroxyethyl cellulose salt and a hydroxypropylmethyl cellulose salt.

In any embodiment of the present application, the weight percentage of the first thickener in the current collector coating layer is ≤ 40%.

In any embodiment of the present application, the current collector coating layer has a thickness of 1 µm-1,000 µm.

In any embodiment of the present application, the current collector coating layer has a thickness of 4 µm-100 µm.

In any embodiment of the present application, the current collector coating layer has a thickness of 6 µm-20 µm.

In any embodiment of the present application, the solid-state battery cell includes a positive electrode layer, a solid-state electrolyte layer and a negative electrode layer. The solid-state electrolyte layer is located between the positive electrode layer and the negative electrode layer.

In any embodiment of the present application, the positive electrode layer includes a positive electrode active material.

In any embodiment of the present application, the positive electrode active material includes one or more of an oxide with a layered structure, a phosphate with an olivine structure, a compound with a spinel structure, an inorganic complex, sulfur and a sulfide.

In any embodiment of the present application, the weight percentage of the positive electrode active material in the positive electrode coating is 50%-99.99%.

In any embodiment of the present application, the positive electrode layer includes a first conductive agent.

In any embodiment of the present application, the first conductive agent includes one or more of carbon materials with good conductivity, such as conductive carbon black, acetylene black, a conductive carbon fiber, a carbon nanotube and graphene powder.

In any embodiment of the present application, the weight percentage of the first conductive agent in the positive electrode layer is ≤ 50%.

In any embodiment of the present application, the positive electrode layer includes a first solid-state electrolyte.

In any embodiment of the present application, the first solid-state electrolyte includes one or more of an inorganic sulfide solid electrolyte, an inorganic oxide solid electrolyte, and an organic polymer solid electrolyte.

In any embodiment of the present application, the weight percentage of the first solid-state electrolyte in the positive electrode layer is ≤ 50%.

In any embodiment of the present application, the positive electrode layer includes a second binder.

In any embodiment of the present application, the second binder includes one or more of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In any embodiment of the present application, the weight percentage of the second binder in the positive electrode layer is ≤ 50%.

In any embodiment of the present application, the positive electrode layer includes a second thickener.

In any embodiment of the present application, the second thickener includes one or more of a carboxymethyl cellulose salt, a hydroxyethyl cellulose salt and a hydroxypropylmethyl cellulose salt.

In any embodiment of the present application, the weight percentage of the second thickener in the positive electrode layer is ≤ 50%.

In any embodiment of the present application, the negative electrode layer includes a negative electrode active material.

In any embodiment of the present application, the negative electrode active material includes one or more of lithium titanate, hard carbon, graphite, activated carbon, lithium foil, a silicon-based material, a tin-based material, an antimony-based material, a lead-based material, phosphorus and a phosphorus compound.

In any embodiment of the present application, the weight percentage of the negative electrode active material in the negative electrode layer is 50%-99.99%.

In any embodiment of the present application, the negative electrode layer includes a second conductive agent.

In any embodiment of the present application, the second conductive agent includes one or more of carbon materials with good conductivity, such as conductive carbon black, acetylene black, a conductive carbon fiber, a carbon nanotube and graphene powder.

In any embodiment of the present application, the weight percentage of the second conductive agent in the negative electrode layer is ≤ 50%.

In any embodiment of the present application, the negative electrode layer includes a second solid-state electrolyte.

In any embodiment of the present application, the second solid-state electrolyte includes one or more of an inorganic sulfide solid electrolyte, an inorganic oxide solid electrolyte, and an organic polymer solid electrolyte.

In any embodiment of the present application, the weight percentage of the second solid-state electrolyte in the negative electrode layer is ≤ 50%.

In any embodiment of the present application, the negative electrode layer includes a third binder.

In any embodiment of the present application, the third binder includes one or more of styrene butadiene rubber, polyacrylic acid, sodium polyacrylate, polyacrylamide, polyvinyl alcohol, sodium alginate, polymethacrylic acid, and carboxymethyl chitosan.

In any embodiment of the present application, the weight percentage of the third binder in the negative electrode layer is ≤ 50%.

In any embodiment of the present application, the solid-state electrolyte layer includes a solid-state electrolyte particle.

In any embodiment of the present application, the solid-state electrolyte particle includes one or more of an inorganic sulfide solid electrolyte, an inorganic oxide solid electrolyte, and an organic polymer solid electrolyte.

In any embodiment of the present application, the weight percentage of the solid-state electrolyte particle in the solid-state electrolyte layer is 50%-100%.

In any embodiment of the present application, the solid-state electrolyte layer includes a fourth binder.

In any embodiment of the present application, the fourth binder includes one or more of polyethylene oxide and a derivative thereof, polysiloxane and a derivative thereof, polyvinyl chloride and a derivative thereof, polycarbonate and a derivative thereof, polyacrylonitrile and a derivative thereof, polymethyl methacrylate and a derivative thereof, polyvinylidene fluoride and a derivative thereof, polytetrafluoroethylene and a derivative thereof, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In any embodiment of the present application, the weight percentage of the fourth binder in the solid-state electrolyte layer is ≤ 50%.

In any embodiment of the present application, the solid-state electrolyte layer includes a third thickener.

In any embodiment of the present application, the third thickener includes one or more of a carboxymethyl cellulose salt, a hydroxyethyl cellulose salt and a hydroxypropylmethyl cellulose salt.

In any embodiment of the present application, the weight percentage of the third thickener in the solid-state electrolyte layer is ≤ 40%.

In any embodiment of the present application, the battery module further includes a positive electrode lead-out tab and a negative electrode lead-out tab. The positive electrode lead-out tab is electrically connected to the positive electrode current collector, and the negative electrode lead-out tab is electrically connected to the negative electrode current collector.

A second aspect of the present application provides a method for preparing a battery module, which includes forming a stacked structure with a plurality of solid-state battery cells between a positive electrode current collector and a negative electrode current collector, connecting adjacent ones of the solid-state battery cells through a current collector coating layer; and electrically connecting the solid-state battery cells located at both ends to the positive electrode current collector and the negative electrode current collector respectively.

A third aspect of the present application provides a battery pack including the battery module according to the first aspect of the present application, or including a battery module obtained by the method for preparing a battery module according to the second aspect of the present application.

A fourth aspect of the present application provides an electrical apparatus including the battery pack according to the third aspect of the present application.

In the present application, electrical connection is made between the adjacent battery cells through the current collector coating layer. That is, the current collector coating layer is disposed between the adjacent battery cells, so that there is no need to use a current collector of a metal foil material such as copper foil, aluminum foil and the like in the positive and negative electrode plates of the battery cells any more, which greatly reduces the use amount of the current collector of a metal foil material and reduces the production cost of the battery module; moreover, the battery module does not need to adopt a traditional manner of first coating the positive and negative electrode materials onto the current collectors to form battery cells, and then assembling to form a battery module, but instead adopts a manner of coating layer-by-layer to form coating layers, which simplifies the process flow of preparing the battery module.

### Description of Drawings

Fig. 1 is a schematic view of a battery module according to an embodiment of the present application.
Fig. 2 is a schematic view of a battery cell in a battery module according to an embodiment of the present application.
Fig. 3 is a simplified diagram (left panel) of a battery module and a schematic diagram (right panel) of a coating direction of a coating layer, according to Example 1 of the present application.
Fig. 4 is a simplified diagram (left panel) of a battery module and a schematic diagram (right panel) of a coating direction of a coating layer, according to Example 2 of the present application.
Fig. 5 is a simplified diagram (left panel) of a battery module and a schematic diagram (right panel) of a coating direction of a coating layer, according to Example 3 of the present application.
Fig. 6 is a simplified diagram (left panel) of a battery module and a schematic diagram (right panel) of a coating direction of a coating layer, according to Example 4 of the present application.
Fig. 7 is a schematic view of an embodiment of a battery pack.
Fig. 8 is an exploded view of Fig. 7.
Fig. 9 is a schematic view of an electrical apparatus in which a battery pack is used a power source, according to an embodiment of the present application.

### Description of reference numerals:

1. battery module; 11. positive electrode current collector; 12. negative electrode current collector; 13. solid-state battery cell; 131. positive electrode layer; 132. solid-state electrolyte layer; 133. negative electrode layer; 14. current collector coating layer; 2. battery pack ; 21. upper box; 22. lower box; 3. electrical apparatus; 4. shell.

### Detailed Description

Hereinafter, the embodiments of the battery module and a preparation method thereof, a battery pack and an electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary verbosity in the following description and facilitate the understanding of those skilled in the art. In addition, the drawings and subsequent descriptions are provided for those skilled in the art to fully understand the present application, and are not intended to limit the subject matter recited in the claims.

A "range" disclosed in the present application is defined in the form of a lower limit and an upper limit, with a given range being defined by the selection of a lower limit and an upper limit, and the selected lower and upper limits defining the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of ≥ 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

If not specifically stated, "including" and "comprising" mentioned in the present application indicate open inclusion or closed inclusion. For example, the "including" and "comprising" may indicate that it is also possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

During the production of a traditional battery pack, a battery cell is first prepared, then a plurality of battery cells are connected the traditional series and parallel to form a battery module, and then the plurality of battery modules are assembled into the battery pack. The manufacturing of positive and negative electrode plates of a battery cell is generally formed by coating positive and negative electrode materials on current collectors of a metal foil material such as copper foil and aluminum foil. The use of current collectors such as the copper foil and the aluminum foil will increase the cost of a battery; and the preparation process of coating first and then assembling is cumbersome. Through research, the inventor has found a battery module in which a plurality of battery cells are stacked between a positive electrode current collector and a negative electrode current collector, and adjacent battery cells are connected by a current collector coating layer. The battery module can effectively reduce the production cost of the battery module and simplify the process flow of the preparation of the battery module.

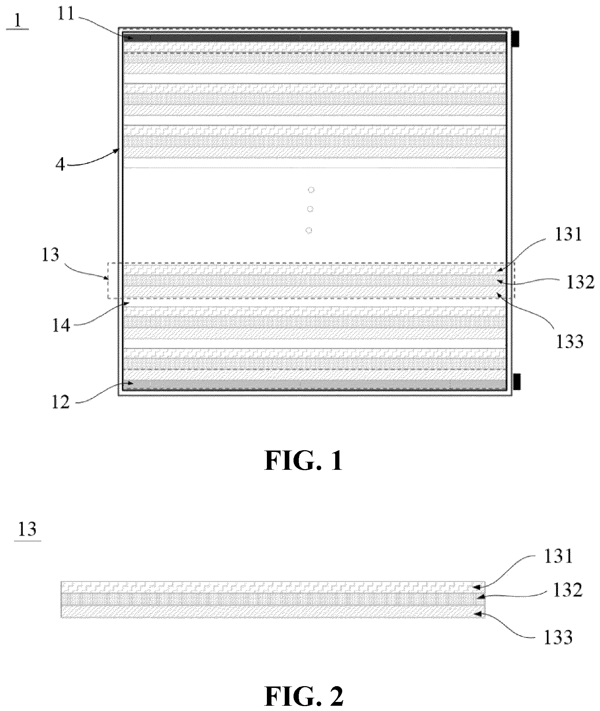

As shown in Fig. 1, in some embodiments, a first aspect of the present application provides a battery module 1. The battery module 1 includes a positive electrode current collector 11, a negative electrode current collector 12, and a plurality of solid-state battery cells 13. The plurality of solid-state battery cells 13 are stacked between the positive electrode current collector 11 and the negative electrode current collector 12. Adjacent ones of the solid-state battery cells 13 are electrically connected through a current collector coating layer 14. The solid-state battery cells 13 at both ends are electrically connected to the positive electrode current collector 11 and the negative electrode current collector 12 respectively.

In the present application, electrical connection is made between the adjacent battery cells 13 through the current collector coating layer 14, so that there is no need to use a current collector of a metal foil material such as copper foil, aluminum foil and the like in the positive and negative electrode plates of the solid-state battery cells 13 any longer, which greatly reduces the use amount of the current collector of a metal foil material and reduces the production cost of the battery module 1; moreover, the battery module 1 does not need to adopt a traditional manner of first coating the positive and negative electrode materials onto the current collectors to form solid-state battery cells 13, and then assembling to form a battery module 1, which simplifies the process flow of preparing the battery module 1.

In some embodiments, the current collector coating layer 14 includes a conductive material. The conductive material includes one or more of conductive carbon black, a carbon nanotube, graphene and a conductive polymer. Thus, the conductive material in the current collector coating layer 14 includes one or more of conductive carbon black, a carbon nanotube, graphene and a conductive polymer, which can make the current collector coating layer 14 have good electronic conductivity and not have an ability of conducting lithium ions and sodium ions. That is, the formed current collector coating layer 14 can conduct electrons but not the lithium ions and sodium ions, and can function as a current collector of a metal foil material.

In some embodiments, the current collector coating layer 14 can further include a first binder. The first binder as used may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the current collector coating layer 14 may further include a first thickener. The first thickener is sodium carboxymethyl cellulose (CMC-Na).

In some embodiments, in the current collector coating layer 14, the weight percentage of the conductive material is 10%-100%, the weight percentage of the first binder is ≤ 50%, and the weight percentage of the first thickener is ≤ 40%.

It can be understood that the weight percentage of the conductive material in the current collector coating layer 14 can be, but is not limited to 10%, 20%, 30%, 40%, 50%, 60%, 70%, 80%, 90%, and 100%; the weight percentage of the first binder in the current collector coating layer 14 can be, but is not limited to 0%, 10%, 20%, 30%, 40%, and 50%; and the weight percentage of the first thickener in the current collector coating layer 14 can be, but is not limited to 0%, 10%, 20%, 30%, and 40%. That is, the current collector coating layer 14 may be all conductive materials, may be a conductive material and partial of the first binder or the first thickener, or may also contain a conductive material, the first binder and the first thickener agent at the same time.

In some embodiments, the current collector coating layer 14 has a thickness of 1 µm-1,000 µm.

It can be understood that the thickness of the current collector coating layer 14 can be, but is not limited to 1 µm, 10 µm, 100 µm, 200 µm, 300 µm, 400 µm, 500 µm, 600 µm, 700 µm, 800 µm, 900 µm, and 1,000 µm. The specific thickness of the current collector coating layer 14 can be set according to actual needs.

As shown in Fig. 2, in some embodiments, the solid-state battery cell 13 includes a positive electrode layer 131, a solid-state electrolyte layer 132 and a negative electrode layer 133. The solid-state electrolyte layer 132 is located between the positive electrode layer 131 and the negative electrode layer 133. Therefore, in the present application, the positive electrode layer 131, the solid-state electrolyte layer 132 and the negative electrode layer 133 constituting the solid-state battery cell 13 can each be in the form of a coating layer. That is, the positive electrode layer 131, the solid-state electrolyte layer 132 and the negative electrode layer 133 are combined together by coating to form the solid-state battery cell 13. A current collector composed of metal foil does not need to be disposed in the solid-state battery cell 13. That is, it is not necessary to coat a positive electrode slurry onto the foil material of the positive electrode current collector to form a positive electrode plate, and it is not necessary to coat a negative electrode slurry onto the foil material of the negative electrode current collector to form the negative electrode plate. It is beneficial to reduce the production cost of the battery module 1 and simplify the production process.

In some embodiments, the positive electrode layer 131 includes a positive electrode active material. The positive electrode active material includes one or more of an oxide with a layered structure, a phosphate with an olivine structure, a compound with a spinel structure, an inorganic complex, sulfur and a sulfide.

In some embodiments, the positive electrode layer 131 further includes a first conductive agent. The first conductive agent includes one or more of carbon materials with good conductivity, such as conductive carbon black, acetylene black, a conductive carbon fiber, a carbon nanotube and graphene powder.

In some embodiments, the positive electrode layer 131 further includes a first solid-state electrolyte. The first solid-state electrolyte includes one or more of an inorganic sulfide solid electrolyte, an inorganic oxide solid electrolyte, and an organic polymer solid electrolyte.

In some embodiments, the positive electrode layer 131 further includes a second binder. The second binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode layer 131 further includes a second thickener. The second thickener is sodium carboxymethyl cellulose.

Further, in some embodiments, in the positive electrode layer 131, the weight percentage of the positive electrode active material is 50%-99.99%, the weight percentage of the first conductive agent is ≤ 50%, the weight percentage of the first solid-state electrolyte is ≤ 50%, the weight percentage of the second binder is ≤ 50%, and the weight percentage of the second thickener is ≤ 50%.

It can be understood that, in the positive electrode layer 131, the weight percentage of the positive electrode active material can be but is not limited to 50%, 60%, 70%, 80%, 90%, and 99.99%; the weight percentage of the first conductive agent can be but is not limited to 0%, 10%, 20%, 30%, 40%, and 50%; the weight percentage of the first solid-state electrolyte can be but is not limited to 0%, 10%, 20%, 30%, 40%, and 50%; the weight percentage of the second binder can be but is not limited to 0%, 10%, 20%, 30%, 40%, and 50%; and the weight percentage of the second thickener can be but is not limited to 0%, 10%, 20%, 30%, 40%, and 50%.

In some embodiments, the negative electrode layer 133 includes a negative electrode active material. The negative electrode active material includes one or more of lithium titanate, hard carbon, graphite, activated carbon, lithium foil, a silicon-based material, a tin-based material, an antimony-based material, a lead-based material, phosphorus and a phosphorus compound.

In some embodiments, the negative electrode layer 133 further includes a second conductive agent. The second conductive agent includes one or more of carbon materials with good conductivity, such as conductive carbon black, acetylene black, a conductive carbon fiber, a carbon nanotube and graphene powder.

In some embodiments, the negative electrode layer 133 further includes a second solid-state electrolyte. The second solid-state electrolyte includes one or more of an inorganic sulfide solid electrolyte, an inorganic oxide solid electrolyte, and an organic polymer solid electrolyte.

In some embodiments, the negative electrode layer 133 further includes a third binder. The third binder may be one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Further, in some embodiments, in the negative electrode layer 133, the weight percentage of the negative electrode active material is 50%-99.99%, the weight percentage of the second conductive agent is ≤ 50%, the weight percentage of the second solid-state electrolyte is ≤ 50%, and the weight percentage of the third binder is ≤ 50%.

It can be understood that, in the negative electrode layer 133, the weight percentage of the negative electrode active material can be but is not limited to 50%, 60%, 70%, 80%, 90%, and 99.99%; the weight percentage of the second conductive agent can be but is not limited to 0%, 10%, 20%, 30%, 40%, and 50%; the weight percentage of the second solid-state electrolyte can be but is not limited to 0%, 10%, 20%, 30%, 40%, and 50%; and the weight percentage of the third binder can be but is not limited to 0%, 10%, 20%, 30%, 40%, and 50%.

In some embodiments, the solid-state electrolyte layer 132 includes a solid-state electrolyte particle. The solid-state electrolyte particle includes one or more of an inorganic sulfide solid electrolyte, an inorganic oxide solid electrolyte, and an organic polymer solid electrolyte.

In some embodiments, the solid-state electrolyte layer 132 further includes a fourth binder. The fourth binder includes one or more of polyethylene oxide and a derivative thereof, polysiloxane and a derivative thereof, polycarbonate and a derivative thereof, polyacrylonitrile and a derivative thereof, polymethyl methacrylate and a derivative thereof, polyvinyl chloride and a derivative thereof, polyvinylidene fluoride and a derivative thereof, polytetrafluoroethylene and a derivative thereof, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the solid-state electrolyte layer 132 further includes a third thickener. The third thickener is sodium carboxymethyl cellulose.

Further, in some embodiments, in the solid-state electrolyte layer 132, the weight percentage of the solid-state electrolyte particle is 50%-100%, the weight percentage of the fourth binder is ≤ 50%, and the weight percentage of the third thickener is ≤ 40%.

It can be understood that, in the solid-state electrolyte layer 132, the weight percentage of the solid-state electrolyte particle can be, but is not limited to 50%, 60%, 70%, 80%, 90%, and 100%; the weight percentage of the fourth binder can be but is not limited to 0%, 10%, 20%, 30%, 40%, and 50%; and the weight percentage of the third thickener can be but is not limited to 0%, 10%, 20%, 30%, and 40%.

A second aspect of the present application further provides a method for preparing a battery module 1, which includes forming a stacked structure with a plurality of solid-state battery cells 13 between a positive electrode current collector 11 and a negative electrode current collector 12, connecting adjacent ones of the solid-state battery cells 13 through a current collector coating layer 14; and electrically connecting the solid-state battery cells 13 located at both ends to the positive electrode current collector 11 and the negative electrode current collector 12 respectively.

The method for preparing a battery module 1 described above in the present application forms a current collector coating layer 14 by coating a slurry of the current collector coating layer between the solid-state battery cell 13 and the solid battery cell 13, so that there is no need to use the metal current collector formed from the metal foil material in the positive and negative electrodes of each solid-state battery cell 13, which greatly reduces the production cost of the battery module 1; at the same time, it is not necessary to adopt the manner of firstly forming a solid-state battery cell 13 consisting of positive and negative electrode plates by coating the positive and negative electrode slurry onto the metal current collectors, and then assembling a plurality of the solid-state battery cells 13 to form the battery module 1, which can effectively simplify the process flow of preparation.

A third aspect of the present application further provides a battery pack 2. The battery pack 2 includes the battery module 1 according to the first aspect of the present application, or includes a battery module 1 obtained by the method for preparing a battery module 1 according to the second aspect of the present application.

A fourth aspect of the present application further provides an electrical apparatus 3 including the battery pack 2 according to the third aspect of the present application.

The battery module 1, the battery pack 2 and the electrical apparatus 3 of the present application will be further described hereafter with appropriate reference to the accompanying drawings.

Unless otherwise specified, the components, material types or contents of the battery as mentioned are applicable to both a lithium-ion secondary battery and a sodium-ion secondary battery.

As shown in Fig. 1, in some embodiments, a plurality of solid-state battery cells 13 are assembled into a battery module 1, and the number of the solid-state battery cells 13 comprised in the battery module 1 are multiple, and the specific number may be selected by those skilled in the art according to the application and capacity of the battery module 1.

In the battery module 1, a plurality of solid-state battery cells 13 may be sequentially arranged along a length direction of the battery module 1. Of course, they can also be arranged in any other way.

Optionally, a shell 4 having an accommodating space can be disposed outside the battery module 1, and one or more battery modules 1 of the present application are accommodated in the accommodating space to form a module-free integrated battery pack. An insulating layer may also be provided between each coating layer of the battery module 1 and the shell 4 to prevent electronic conduction among different coating layers.

By controlling the number of solid-state battery cells 13 in the battery module 1, the output voltage of the battery module 1 can be adjusted conveniently. For example, assuming that the voltage of one solid-state battery cell 13 is V0, the relationship between the number n of the solid-state battery cells 13 in the battery module 1 and the output voltage V of the battery module 1 is approximately: V = nV0.

By changing the surface area of the coating layer, the capacity of the battery module 1 can be easily adjusted; and by adjusting the coating area (by default, the coating thickness of each positive electrode coating layer or negative electrode coating layer remains unchanged), the capacity value of the battery module 1 can be changed conveniently.

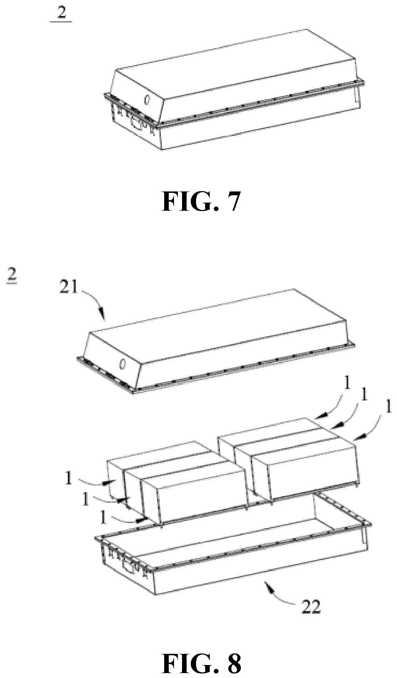

As shown in Figs. 7 and 8, in some embodiments, the aforementioned battery module 1 may further be assembled into a battery pack 2, the number of battery modules 1 contained in the battery pack 2 may be one or more, and the specific number can be selected by those skilled in the art according to the use and capacity of the battery pack 2.

The battery pack 2 may include a battery box and a plurality of battery modules 1 disposed in the battery box. The battery box includes an upper box body 21 and a lower box body 22, the upper box body 21 can cover the lower box body 22 to form a closed space for accommodating the battery modules. The plurality of battery modules 1 may be arranged in the battery box in any manner.

It should be noted that, as shown in Fig. 1 of the present application, the battery module 1 having the shell 4 can be used alone as a module-free integrated battery pack; or alternatively one or more of the aforementioned battery modules 1 having shells 4 are placed in a battery box to assemble into a battery pack 2 as shown in Figs. 7 and 8 for use.

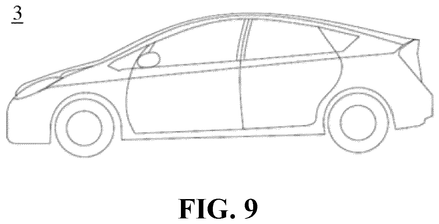

As shown in Fig. 9, the present application further provides an electrical apparatus 3. The electrical apparatus 3 includes at least one of the battery module 1 or the battery pack 2 provided in the present application. The battery module 1 or the battery pack 2 can be used as a power source for the electrical apparatus 3, or as an energy storage unit for the electrical apparatus 3. The electrical apparatus 3 may include, but is not limited to, a mobile device (e.g. a mobile phone, and a laptop, etc.), an electric vehicle (e.g. an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

The battery module 1 or the battery pack 2 can be selected as the electrical apparatus 3 according to the use requirements of the electrical apparatus.

Fig. 9 shows an electrical apparatus 3 as an example. The electrical apparatus 3 is an all-electric vehicle, a hybrid electric vehicle or a plug-in hybrid electric vehicle, and the like. In order to satisfy the requirements of the electrical apparatus 3 for high power and high energy density of the battery, the battery pack 2 or battery module 1 can be employed.

### Examples

In order to make the solved technical problems, technical solutions and beneficial effects of the present application more clear, the present application will be further described in detail in connection with examples and accompanying drawings. Apparently, the described examples are merely a part rather than all of the embodiments of the present application. The following description of at least one exemplary example is merely illustrative in nature and in no way serves as any limitation on the present application and applications thereof. Based on the embodiments in the present application, all other embodiments obtained by those of ordinary skills in the art without creative labor are within the claimed scope of the present application.

If no specific technology or condition is indicated in the examples, it shall be carried out according to the technology or condition described in the literature in the art or according to product instructions. All of the used agents or instruments which are not specified with the manufacturer are conventional commercially-available products.

### Example 1:

### 1) Preparation of slurry of positive electrode layer 131:

A layered ternary transition metal oxide as a positive electrode active material accounting for 94% of the total weight of a slurry of a positive electrode layer 131, 2% of a conductive agent Super P, 2% of a binder PVDF, and 2% of a garnet-type solid-state electrolyte LLZO were mixed uniformly to obtain the slurry of the positive electrode layer 131. An appropriate amount of NMP (N-methyl pyrrolidone) was added into the slurry of the positive electrode layer 131.

### 2) Preparation of outermost layer positive electrode plate:

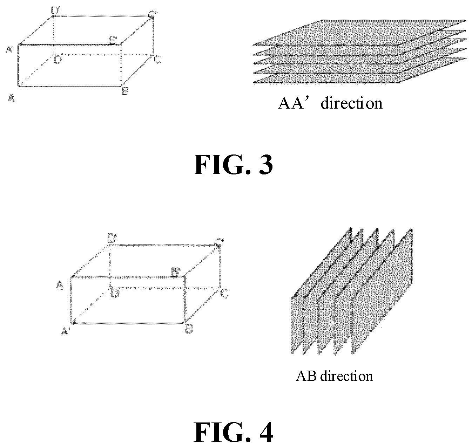

The slurry of the positive electrode layer 131 was evenly coated on a single side of aluminum foil of the positive electrode current collector 11, oven dried and cold pressed , and then cut to the same size as the ABCD surface in Fig. 3, with the total negative electrode lead-out tab on one side being remained, so as to obtain the outermost layer positive electrode plate.

### 3) Preparation of material for negative electrode layer 133:

Graphite as a negative electrode active material accounting for 96% of the total weight of a slurry of a negative electrode layer 133, 1% of the conductive agent Super P, 2% of a binder PTFE, and 1% of a PTFE binder were mixed uniformly to obtain the slurry of the negative electrode layer 133.

### 4) Preparation of outermost layer negative electrode plate:

The slurry of the negative electrode layer 133 was evenly coated on a single side of copper foil of the negative electrode current collector 12, oven dried and cold pressed , and then cut to the same size as the A'B'C'D' surface in Fig. 3, with the total negative electrode lead-out tab on one side being remained, so as to obtain the outermost layer negative electrode plate.

### 5) Preparation of slurry of current collector coating layer 14:

The conductive carbon black accounting for 90% of the total weight of the slurry of the current collector coating layer 14 and 10% of PVDF were evenly mixed to obtain the slurry of the current collector coating layer 14. An appropriate amount of NMP was added into the slurry of the current collector coating layer 14.

### 6) Preparation of slurry of solid-state electrolyte layer 132:

LLZO as the solid-state electrolyte material accounting for 98% of the total weight of the slurry of the solid-state electrolyte layer 132 and 2% of PTFE were evenly mixed to obtain the coating layer material of the solid-state electrolyte layer 132.

### 7) Preparation of battery module 1:

The prepared outermost layer positive electrode plate was put into the case of the battery module, the outermost layer positive electrode plate was used as a base, a layer of the slurry of the solid-state electrolyte layer 132 was covered on the surface of the positive electrode layer 131 of the outermost layer positive electrode plate, and they were hot pressed to obtain the solid-state electrolyte layer 132.

The solid-state electrolyte layer 132 was used as a base, a layer of the slurry of the negative electrode layer 133 was evenly covered on the surface of the solid-state electrolyte layer 132, and they were cold pressed to obtain the negative electrode layer 133. So far, a solid-state battery cell 13 consisting of the positive electrode layer 131, the solid-state electrolyte layer 132, and the negative electrode layer 133 has been prepared.

A layer of the slurry of the current collector coating layer 14 was evenly coated onto an upper surface of the negative electrode layer 133, oven dried and cold pressed to obtain the current collector coating layer 14. The coating was repeated according to the order of the positive electrode layer 131, the solid-state electrolyte layer 132, the negative electrode layer 133, and the current collector coating layer 14 sequentially. This step was repeated for 105 times (106 solid-state battery cells 13). After the 107th solid-state battery cell 13 was coated with the solid-state electrolyte layer 132, the prepared outermost layer negative electrode plate was covered on the solid-state electrolyte layer 132 and hot pressed to obtain the battery module 1 of the present application. The simplified diagram of the battery module 1 and the coating direction of each coating layer were as shown in Fig. 3.

### Example 2:

### 1) Preparation of slurry of positive electrode layer 131:

A layered ternary transition metal oxide as a positive electrode active material accounting for 94% of the total weight of a slurry of a positive electrode layer 131, 2% of a conductive agent Super P, 2% of a binder PVDF, and 2% of a garnet-type solid-state electrolyte LLZO were mixed uniformly to obtain the slurry of the positive electrode layer 131. An appropriate amount of NMP (N-methyl pyrrolidone) was added into the slurry of the positive electrode layer 131.

### 2) Preparation of outermost layer positive electrode plate:

The slurry of the positive electrode layer 131 was evenly coated on a single side of aluminum foil of the positive electrode current collector 11, oven dried and cold pressed , and then cut to the same size as the AA'D'D surface in Fig. 4, with the total negative electrode lead-out tab on one side being remained, so as to obtain the outermost layer positive electrode plate.

### 3) Preparation of material for negative electrode layer 133:

Graphite as a negative electrode active material accounting for 96% of the total weight of a slurry of a negative electrode layer 133, 1% of the conductive agent Super P, 2% of a binder PTFE, and 1% of a PTFE binder were mixed uniformly to obtain the slurry of the negative electrode layer 133.

### 4) Preparation of outermost layer negative electrode plate:

The slurry of the negative electrode layer 133 was evenly coated on a single side of copper foil of the negative electrode current collector 12, oven dried and cold pressed , and then cut to the same size as the AA'D'D surface in Fig. 4, with the total negative electrode lead-out tab on one side being remained, so as to obtain the outermost layer negative electrode plate.

### 5) Preparation of slurry of current collector coating layer 14:

The conductive carbon black accounting for 90% of the total weight of the slurry of the current collector coating layer 14 and 10% of PVDF were evenly mixed to obtain the slurry of the current collector coating layer 14. An appropriate amount of NMP was added into the slurry of the current collector coating layer 14.

### 6) Preparation of slurry of solid-state electrolyte layer 132:

LLZO as the solid-state electrolyte material accounting for 98% of the total weight of the slurry of the solid-state electrolyte layer 132 and 2% of PTFE were evenly mixed to obtain the material of the solid-state electrolyte layer 132.

### 7) Preparation of battery module 1:

The prepared outermost layer positive electrode plate was put into the case of the battery module, the outermost layer positive electrode plate was used as a base, a layer of the slurry of the solid-state electrolyte layer 132 was covered on the surface of the positive electrode coating layer of the outermost layer positive electrode plate, and they were hot pressed to obtain the solid-state electrolyte layer 132.

The solid-state electrolyte layer 132 was used as a base, a layer of the slurry of the negative electrode layer 133 was evenly covered on the surface of the solid-state electrolyte layer 132, and they were cold pressed to obtain the negative electrode layer 133. So far, a solid-state battery cell 13 consisting of the positive electrode layer 131, the solid-state electrolyte layer 132, and the negative electrode layer 133 has been prepared.

A layer of the slurry of the current collector coating layer 14 was evenly coated onto an upper surface of the negative electrode layer 133, oven dried and cold pressed to obtain the current collector coating layer 14. The coating was repeated according to the order of the positive electrode layer 131, the solid-state electrolyte layer 132, the negative electrode layer 133, and the current collector coating layer 14 sequentially. This step was repeated for 105 times (106 solid-state battery cells 13). After the 107th solid-state battery cell 13 was coated with the solid-state electrolyte layer 132, the prepared outermost layer negative electrode plate was covered on the solid-state electrolyte layer 132 and hot pressed to obtain the battery module 1 of the present application. The simplified diagram of the battery module 1 and the coating direction of each coating layer were as shown in Fig. 4.

### Example 3:

### 1) Preparation of slurry of positive electrode layer 131:

A layered ternary transition metal oxide as a positive electrode active material accounting for 94% of the total weight of a slurry of a positive electrode layer 131, 2% of a conductive agent Super P, 2% of a binder PVDF, and 2% of a garnet-type solid-state electrolyte LLZO were mixed uniformly to obtain the slurry of the positive electrode layer 131. An appropriate amount of NMP was added into the slurry of the positive electrode layer 131.

### 2) Preparation of outermost layer positive electrode plate:

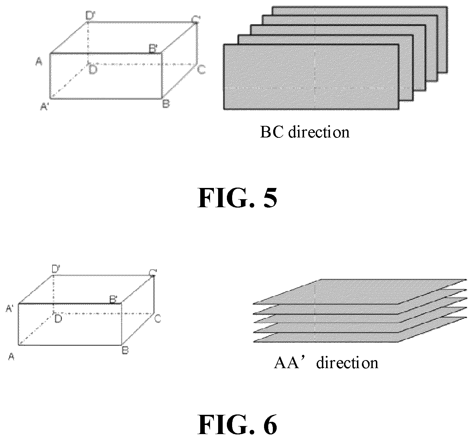

The slurry of the positive electrode layer 131 was evenly coated on a single side of aluminum foil of the positive electrode current collector 11, oven dried and cold pressed , and then cut to the same size as the AA'BB' surface in Fig. 5, with the total negative electrode lead-out tab on one side being remained, so as to obtain the outermost layer positive electrode plate.

### 3) Preparation of material for negative electrode layer 133:

Graphite as a negative electrode active material accounting for 96% of the total weight of a slurry of a negative electrode layer 133, 1% of the conductive agent Super P, 2% of a binder PTFE, and 1% of a PTFE binder were mixed uniformly to obtain the slurry of the negative electrode layer 133.

### 4) Preparation of outermost layer negative electrode plate:

The slurry of the negative electrode layer 133 was evenly coated on a single side of copper foil of the negative electrode current collector 12, oven dried and cold pressed , and then cut to the same size as the AA'BB' surface in Fig. 5, with the total negative electrode lead-out tab on one side being remained, so as to obtain the outermost layer negative electrode plate.

### 5) Preparation of slurry of current collector coating layer 14:

The conductive carbon black accounting for 90% of the total weight of the slurry of the current collector coating layer 14 and 10% of PVDF were evenly mixed to obtain the slurry of the current collector coating layer 14. An appropriate amount of NMP was added into the slurry of the current collector coating layer 14.

### 6) Preparation of slurry of solid-state electrolyte layer 132:

LLZO as the solid-state electrolyte material accounting for 98% of the total weight of the slurry of the solid-state electrolyte layer 132 and 2% of PTFE were evenly mixed to obtain the material of the solid-state electrolyte layer 132.

### 7) Preparation of battery module 1:

The prepared outermost layer positive electrode plate was put into the case of the battery module, the outermost layer positive electrode plate was used as a base, a layer of the slurry of the solid-state electrolyte layer 132 was covered on the surface of the positive electrode coating layer of the outermost layer positive electrode plate, and they were hot pressed to obtain the solid-state electrolyte layer 132.

The solid-state electrolyte layer 132 was used as a base, a layer of the slurry of the negative electrode layer 133 was evenly covered on the surface of the solid-state electrolyte layer 132, and they were cold pressed to obtain the negative electrode layer 133. So far, a solid-state battery cell 13 consisting of the positive electrode layer 131, the solid-state electrolyte layer 132, and the negative electrode layer 133 has been prepared.

A layer of the slurry of the current collector coating layer 14 was evenly coated onto an upper surface of the negative electrode layer 133, oven dried and cold pressed to obtain the current collector coating layer 14. The coating was repeated according to the order of the positive electrode layer 131, the solid-state electrolyte layer 132, the negative electrode layer 133, and the current collector coating layer 14 sequentially. This step was repeated for 105 times (106 solid-state battery cells 13). After the 107th solid-state battery cell 13 was coated with the solid-state electrolyte layer 132, the prepared outermost layer negative electrode plate was covered on the solid-state electrolyte layer 132 and hot pressed to obtain the battery module 1 of the present application. The simplified diagram of the battery module 1 and the coating direction of each coating layer were as shown in Fig. 5.

### Example 4:

### 1) Preparation of slurry of positive electrode layer 131:

A layered transition metal oxide as a positive electrode active material accounting for 94% of the total weight of a slurry of a positive electrode layer 131, 2% of a conductive agent Super P, 2% of a binder PVDF, and 2% of β-Al₂O₃ were mixed uniformly to obtain the slurry of the positive electrode layer 131. An appropriate amount of NMP was added into the slurry of the positive electrode layer 131.

### 2) Preparation of outermost layer positive electrode plate:

The slurry of the positive electrode layer 131 was evenly coated on a single side of aluminum foil of the positive electrode current collector 11, oven dried and cold pressed , and then cut to the same size as the ABCD surface in Fig. 6, with the total negative electrode lead-out tab on one side being remained, so as to obtain the outermost layer positive electrode plate.

### 3) Preparation of material for negative electrode layer 133:

Graphite as a negative electrode active material accounting for 96% of the total weight of a slurry of a negative electrode layer 133, 1% of the conductive agent Super P, 2% of a binder PTFE, and 1% of a PTFE binder were mixed uniformly to obtain the slurry of the negative electrode layer 133.

### 4) Preparation of outermost layer negative electrode plate:

The slurry of the negative electrode layer 133 was evenly coated on a single side of copper foil of the negative electrode current collector 12, oven dried and cold pressed , and then cut to the same size as the A'B'C'D' surface in Fig. 6, with the total negative electrode lead-out tab on one side being remained, so as to obtain the outermost layer negative electrode plate.

### 5) Preparation of slurry of current collector coating layer 14:

The conductive carbon black accounting for 90% of the total weight of the slurry of the current collector coating layer 14 and 10% of PVDF were evenly mixed to obtain the slurry of the current collector coating layer 14. An appropriate amount of NMP was added into the slurry of the current collector coating layer 14.

### 6) Preparation of slurry of solid-state electrolyte layer 132:

β-Al₂O₃ as the solid-state electrolyte material accounting for 98% of the total weight of the slurry of the solid-state electrolyte layer 132 and 2% of PTFE were evenly mixed to obtain the material of the solid-state electrolyte layer 132.

### 7) Preparation of battery module 1:

The prepared outermost layer positive electrode plate was put into the case of the battery module, the outermost layer positive electrode plate was used as a base, a layer of the slurry of the solid-state electrolyte layer 132 was covered on the surface of the positive electrode coating layer of the outermost layer positive electrode plate, and they were hot pressed to obtain the solid-state electrolyte layer 132.

The solid-state electrolyte layer 132 was used as a base, a layer of the slurry of the negative electrode layer 133 was evenly covered on the surface of the solid-state electrolyte layer 132, and they were cold pressed to obtain the negative electrode layer 133. So far, a solid-state battery cell 13 consisting of the positive electrode layer 131, the solid-state electrolyte layer 132, and the negative electrode layer 133 has been prepared.

A layer of the slurry of the current collector coating layer 14 was evenly coated onto an upper surface of the negative electrode layer 131, oven dried and cold pressed to obtain the current collector coating layer 14. The coating was repeated according to the order of the positive electrode layer 131, the solid-state electrolyte layer 132, the negative electrode layer 133, and the current collector coating layer 14 sequentially. This step was repeated for 105 times (106 solid-state battery cells 13). After the 107th solid-state battery cell 13 was coated with the solid-state electrolyte layer 132, the prepared outermost layer negative electrode plate was covered on the solid-state electrolyte layer 132 and hot pressed to obtain the battery module 1 of the present application. The simplified diagram of the battery module 1 and the coating direction of each coating layer were as shown in Fig. 6.

It should be noted that the present application is not limited to the aforementioned embodiments. The aforementioned embodiments are only examples, and the embodiments that have substantially the same composition as the technical idea and exert the same effects within the scope of the technical solution of the present application are all included in the technical scope of the present application. Furthermore, without departing from the scope of the subject matter of the present application, various modifications that can come into the mind of those skilled in the art applied to the embodiments and other embodiments constructed by combining partial composition elements of the embodiments are also included in the scope of the present application.

## Claims

1. A battery module, comprising a positive electrode current collector, a negative electrode current collector, and a plurality of solid-state battery cells, wherein the plurality of solid-state battery cells are stacked between the positive electrode current collector and the negative electrode current collector, adjacent ones of the solid-state battery cells are electrically connected through a current collector coating layer, and the solid-state battery cells at both ends are electrically connected to the positive electrode current collector and the negative electrode current collector respectively.

2. The battery module according to claim 1, wherein the current collector coating layer comprises a conductive material;
optionally, the conductive material comprises one or more of conductive carbon black, a carbon nanotube, graphene and a conductive polymer; and
optionally, the weight percentage of the conductive material in the current collector coating layer is 10%-100%.

3. The battery module according to claim 1 or 2, wherein the current collector coating layer comprises a first binder;
optionally, the first binder comprises one or more of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin; and
optionally, the weight percentage of the first binder in the current collector coating layer is ≤ 50%.

4. The battery module according to any one of claims 1 to 3, wherein the current collector coating layer comprises a first thickener;
optionally, the first thickener comprises one or more of a carboxymethyl cellulose salt, a hydroxyethyl cellulose salt and a hydroxypropylmethyl cellulose salt; and
optionally, the weight percentage of the first thickener in the current collector coating layer is ≤ 40%.

5. The battery module according to any one of claims 1 to 4, wherein the current collector coating layer has a thickness of 1 µm-1,000 µm;
optionally, the current collector coating layer has a thickness of 4 µm-100 µm; and
optionally, the current collector coating layer has a thickness of 6 µm-20 µm.

6. The battery module according to any one of claims 1 to 5, wherein the solid-state battery cell comprises a positive electrode layer, a solid-state electrolyte layer and a negative electrode layer, and the solid-state electrolyte layer is located between the positive electrode layer and the negative electrode layer.

7. The battery module according to claim 6, wherein the positive electrode layer comprises a positive electrode active material;
optionally, the positive electrode active material comprises one or more of an oxide with a layered structure, a phosphate with an olivine structure, a compound with a spinel structure, an inorganic complex, sulfur and a sulfide; and
optionally, the weight percentage of the positive electrode active material in the positive electrode layer is 50%-99.99%.

8. The battery module according to claim 6 or 7, wherein the positive electrode layer comprises a first conductive agent;
optionally, the first conductive agent comprises one or more of conductive carbon black, acetylene black, a conductive carbon fiber, a carbon nanotube and graphene powder; and
optionally, the weight percentage of the first conductive agent in the positive electrode layer is ≤ 50%.

9. The battery module according to any one of claims 6 to 8, wherein the positive electrode layer comprises a first solid-state electrolyte;
optionally, the first solid-state electrolyte comprises one or more of an inorganic sulfide solid electrolyte, an inorganic oxide solid electrolyte, and an organic polymer solid electrolyte; and
optionally, the weight percentage of the first solid-state electrolyte in the positive electrode layer is ≤ 50%.

10. The battery module according to any one of claims 6 to 9, wherein the positive electrode layer comprises a second binder;
optionally, the second binder comprises one or more of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin; and
optionally, the weight percentage of the second binder in the positive electrode layer is ≤ 50%.

11. The battery module according to any one of claims 6 to 10, wherein the positive electrode layer comprises a second thickener;
optionally, the second thickener comprises one or more of a carboxymethyl cellulose salt, a hydroxyethyl cellulose salt and a hydroxypropylmethyl cellulose salt; and
optionally, the weight percentage of the second thickener in the positive electrode layer is ≤ 50%.

12. The battery module according to any one of claims 6 to 11, wherein the negative electrode layer comprises a negative electrode active material;
optionally, the negative electrode active material comprises one or more of lithium titanate, hard carbon, graphite, activated carbon, lithium foil, a silicon-based material, a tin-based material, an antimony-based material, a lead-based material, phosphorus and a phosphorus compound; and
optionally, the weight percentage of the negative electrode active material in the negative electrode layer is 50%-99.99%.

13. The battery module according to any one of claims 6 to 12, wherein the negative electrode layer comprises a second conductive agent;
optionally, the second conductive agent comprises one or more of conductive carbon black, acetylene black, a conductive carbon fiber, a carbon nanotube and graphene powder; and
optionally, the weight percentage of the second conductive agent in the negative electrode layer is ≤ 50%.

14. The battery module according to any one of claims 6 to 13, wherein the negative electrode layer comprises a second solid-state electrolyte;
optionally, the second solid-state electrolyte comprises one or more of an inorganic sulfide solid electrolyte, an inorganic oxide solid electrolyte, and an organic polymer solid electrolyte; and
optionally, the weight percentage of the second solid-state electrolyte in the negative electrode layer is ≤ 50%.

15. The battery module according to any one of claims 6 to 14, wherein the negative electrode layer comprises a third binder;
optionally, the third binder comprises one or more of styrene butadiene rubber, polyacrylic acid, sodium polyacrylate, polyacrylamide, polyvinyl alcohol, sodium alginate, polymethacrylic acid, and carboxymethyl chitosan; and
optionally, the weight percentage of the third binder in the negative electrode layer is ≤ 50%.

16. The battery module according to any one of claims 6 to 15, wherein the solid-state electrolyte layer comprises a solid-state electrolyte particle;
optionally, the solid-state electrolyte particle comprises one or more of an inorganic sulfide solid electrolyte, an inorganic oxide solid electrolyte, and an organic polymer solid electrolyte; and
optionally, the weight percentage of the solid-state electrolyte particle in the solid-state electrolyte layer is 50%-100%.

17. The battery module according to any one of claims 6 to 16, wherein the solid-state electrolyte layer comprises a fourth binder;
optionally, the fourth binder comprises one or more of polyethylene oxide and a derivative thereof, polysiloxane and a derivative thereof, polyvinyl chloride and a derivative thereof, polycarbonate and a derivative thereof, polyacrylonitrile and a derivative thereof, polymethyl methacrylate and a derivative thereof, polyvinylidene fluoride and a derivative thereof, polytetrafluoroethylene and a derivative thereof, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin; and
optionally, the weight percentage of the fourth binder in the solid-state electrolyte layer is ≤ 50%.

18. The battery module according to any one of claims 6 to 17, wherein the solid-state electrolyte layer comprises a third thickener;
optionally, the third thickener comprises one or more of a carboxymethyl cellulose salt, a hydroxyethyl cellulose salt and a hydroxypropylmethyl cellulose salt; and
optionally, the weight percentage of the third thickener in the solid-state electrolyte layer is ≤ 40%.

19. The battery module according to any one of claims 1 to 18, wherein the battery module further comprises a positive electrode lead-out tab and a negative electrode lead-out tab, the positive electrode lead-out tab is electrically connected to the positive electrode current collector, and the negative electrode lead-out tab is electrically connected to the negative electrode current collector.

20. A method for preparing the battery module according to any one of claims 1 to 19, comprising forming a stacked structure with a plurality of solid-state battery cells between a positive electrode current collector and a negative electrode current collector, connecting adjacent ones of the solid-state battery cells through a current collector coating layer; and electrically connecting the solid-state battery cells located at both ends to the positive electrode current collector and the negative electrode current collector respectively.

21. A battery pack comprising the battery module according to any one of claims 1 to 19 or a battery module obtained by the method for preparing a battery module according to claim 20.

22. An electrical apparatus comprising the battery pack according to claim 21.
